# EUROPÄISCHE PATENTSCHRIFT

(11) **EP 2 026 614 B1**
(45) Veröffentlichungstag und Bekanntmachung des Hinweises auf die Patenterteilung: **14.09.2011**
(21) Anmeldenummer: 08104829.0
(22) Anmeldetag: 22.07.2008
(51) Int. Cl.: H04W 8/24

(54) **Verfahren und Vorrichtung zum automatischen Adaptieren von Netzen**
Device and method for automatically adapting networks
Procédé et dispositif d'adaptation automatique de réseaux

(30) Priorität: 11.08.2007 DE 102007037959
(43) Veröffentlichungstag der Anmeldung: 18.02.2009
(73) Patentinhaber: Deutsche Telekom AG, 53113 Bonn (DE)
(72) Erfinder: Trinkel, Marian, 52372, Kreuzau OT Untermaubach (DE); Müller, Christel, 15732, Schulzendorf (DE)
(74) Vertreter: Kewitz, Ansgar

(56) Entgegenhaltungen:
- EP-A- 0 852 448
- GB-A- 2 292 047
- GB-A- 2 294 844

## Beschreibung

Die Erfindung betrifft ein Verfahren und eine Vorrichtung zum Anpassen von Netzen, insbesondere zum Anpassen der Kompatibilität von Netzwerken.

### Gebiet der Erfindung

Im Bereich der mobilen Kommunikation gibt es eine Reihe von Änderungen der Standards und der angebotenen Dienste, die oftmals aufwendig in Netzwerkkomponenten beziehungsweise in die mobilen Endgeräte integriert werden müssen. Bei älteren Geräten ist dies häufig nicht möglich, da ein Anpassen nicht vorgesehen ist. Eine Verlagerung auf die Basisstation ist ebenfalls nicht denkbar, da es sich bei diesen Basisstationen nicht um offene Konzepte und Systeme handelt, deren Schnittstellen bekannt sind.

Die EP 0852 448 A1 zeigt ein mobiles Endgerät, das eine Vielzahl von Protokoll-Stapeln aufweist, um mit dem mobilen Endgerät zu kommunizieren. Ferner ist der Druckschrift zu entnehmen, dass die Basisstation eine Vielzahl von Stapeln aufweist, um mit den unterschiedlichen mobilen Endgeräten zu kommunizieren. Auch die GB 2294 844 A und GB 2292047 zeigen ein mobiles Endgerät, dem es ermöglicht wird, eine nicht vorhandende Funktionalität herunterzuladen, um diese für das Netzwerk zu implementieren.

### Überblick über die Erfindung

Aufgabe der Erfindung ist es, Verfahren und Vorrichtungen bereitzustellen, die die beschrieben Kompatibilitätsprobleme lösen.

Gelöst wird diese Aufgabe durch eine Vorrichtung und ein Verfahren mit den Merkmalen der unabhängigen Ansprüche.

Im Einzelnen wird die Erfindung durch einen Interpreter oder eine virtuelle Maschine gelöst, die Codes auf einer Netzwerkkomponente interpretiert bzw. ausführt, so dass hierdurch die Kompatibilität wieder gegeben ist. Dieser Interpreter bzw. die virtuelle Maschine läuft in einem gesicherten Bereich und stellt definierte Schnittstellen zu den einzelnen Netzwerkebenen und Komponenten der Geräte bereit. So können Standardfunktionen (APIs) gegeben sein, die einen gesicherten Zugriff auf die unterschiedlichen Ebenen des Netzwerkes erlauben. Der Start einer virtuellen Maschine oder eines Interpreters kann von außen abgestoßen werden, indem an eine definierte Schnittstelle eine Anforderung gesendet wird, die mit Parametern versehen ist. Diese Parameter können z.B. mitteilen, wo der Code, der zu laden ist, abgelegt ist. Es ist ebenfalls denkbar, dass als Parameter des auszuführenden Codes mit übertragen wird. Die virtuelle Maschine beziehungsweise der Interpreter kann auch durch das Gesät selber gestartet werden, wenn festgestellt wurde, welche Fähigkeiten gegeben sind, beziehungsweise welche nicht gegeben sind, um diese fehlenden dann auszugleichen.

Hierzu wird in einem ersten Schritt die Kompatibilität des mobilen Endgerätes zum Netzwerkelement analysiert. Diese Analyse kann beim ersten Verbindungsaufbau auf einer der untersten Netzwerkschichten erfolgen. So kann anhand von Testmustern, die an das bzw. von dem Endgerät gesendet werden, erkannt werden, welche Fähigkeiten gegeben sind. Oftmals ist dies durch die Kennung der Komponenten und deren Firmwarestatus ersichtlich.

Falls das mobile Endgerät nicht kompatibel mit den Netzwerkkomponenten ist, wird ein ausführbarer Code vom mobilen Endgerät oder aus dem Netzwerk geladen und es erfolgt ein Ausführen dieses Codes durch das Netzwerkelement auf einem Interpreter und/oder einer virtuellen Maschine, wobei der Code die Netzwerkkompatibilität wieder herstellt, Alternativ kann ein entsprechender Code für das mobile Endgerät vom Endgerät oder aus dem Netzwerk geladen werden und auf dem mobilen Endgerät auf einem Interpreter und/oder einer virtuellen Maschine ausgeführt werden, wobei der Code die Netzwerk/Kompatibilität wieder herstellt. Bei der Prüfung auf Kompatibilität kann die Version der Software auf dem mobilen Endgerät erkannt werden, wobei eine alte Version ausgelagert oder deaktiviert, und aus dem Netzwerk eine neue gesendet wird, um dann die Kommunikation zu starten.

Unter einem Interpreter wird unteranderem auch ein Softwarestück (Software Applet) verstanden, dass beispielsweise auch vordefiniert in Teilen als Quellcode und/oder ausführbare Quellcode vorliegen kann. Das heißt beispielhaft, der Interpreter übersetzt nicht nur Zeile für Zeile, sondern findet auch fertig übersetzte Teile des Codes vor, die der Interpreter einfach in seinen Code, Programm integriert und z.B. nicht übersetzten und/oder interpretiert und/oder syntaktisch Überprüfen muss. Dies hat unter anderem den Vorteil, dass der Interpeter durch vorgefertigte ausführbare Quellcodes (auch in Teilen) schneller z.B. übersetzen kann und das Programm eine kürzere Rechenzeit besitzt. Dies hat unter anderem vorteilhaft zur Folge, dass eine höhere Auslastung der Rechenkapazität erfolgen kann und somit eine höhere Kanalzahl bedient werden kann.
Unter einer virtuellen Maschine wird unter anderem auch ein dynamischer Automat oder auch ein Automat verstanden. Diese Virtuelle Maschine, Automat kann auch vorteilhafter Weise zur Simulation der Konfiguration des Systems, Systemteile verwendet werden. So kann beispielsweise für ein mögliches Endgeräte mittels der virtuellen Maschine, Automat getestet und simuliert werden, ob es zu Konfliktfällen z.B. mit den Schnittstellen kommen kann, die Netzauslastung den gesetzten Parameter übersteigt, um im Vorhinein schon technische Maßnahmen einzuleiten.
Weiter kann auch eine Kombination der virtuellen Maschine und des Interpreter genommen werden. Dies hat unter anderem den Vorteil, dass der Interpeter durch Ergebnisse des Automaten, vorgefertigte ausführbare Quellcodes (auch in Teilen) schneller z.B. übersetzen kann und das Programm eine kürzere Rechenzeit besitzt. Dies hat unter anderem den Vorteil, dass eine höhere Auslastung der Rechenkapazität erfolgt und somit eine höhere Kanalzahl bedient werden kann. Weitere Parameter können verwendet werden, wie Kosten, Risiko, Zuverlässigkeit der Systeme, Systemgruppen, Bauteile, Komplexität.
Ebenso kann auch eine Kombination vom ausführbarem Programm und/oder einem Content erfolgen. Beispielhafter Datensatz <Zeilen-Nr des Interpreter, Programmzeile und/oder ausführbares Programm und/oder Content ... >, oder auch Teile zum Beispiel <Zeilen-Nr. ausführbares Programm, ...>, <Zeilen-Nr., Content ...>. Hierbei wird unter Content auch Beispielsweise verstanden, dass der Content, Inhalte von Dokumenten, Daten ist, die nicht das ausführbare Programm beeinflussen. In einer besonderen Ausführung kann auch unter Content verstanden werden, dass der Content Daten selber manipuliert und/oder bearbeitet. Beispielsweise wird bei dem Ansprechen einer bestimmten Schnittstelle der Content, hier ein Bild A des Endgerätes A, in ein Bild B des Endgerätes A verändert wird -, da nach Durchlaufen des Programms das Endgerät A eine andere Funktion B hat und der Funktionalität des Standart Endgerätes B entspricht. In einer weiteren besonderen Ausführungsform kann der Content ein Programm beeinflussen, dadurch dass zum Beispiel ein Content mit dem Bild des Endgerätes, Inhalt einer Straftat, Content einer Graustufe, sofort eine andere Programmsteuerung zulässt und/oder veranlasst.
Innerhalb der technischen Schichten der Next Generation Networks, der IP Multimedia Systeme (IMS) können solche kombinatorischen Strukturen, zwischen Interpreter, (ausführbarem Programm, Compiler), virtuelle Maschine, Automaten jeglicher Facette, vorteilhaft verwendet werden.

In einer bevorzugten Ausführungsform hält eine Basisstation in einer Datenbank eine Vielzahl von unterschiedlichen Codemodulen bereit, die dann schnell geladen werden, um sie entweder selber auszuführen, oder durch das mobile Telefon. Diese Informationen werden in der bevorzugten Ausführungsform über eine niedrigere Netzwerkebene übertragen, als die folgenden Dienstdaten. Diese niedrigere Netzwerkebene ist vorzugsweise Level 1 oder Level 2, in den entsprechenden 3-stufigen oder 7-stufigen Netzwerkmodellen.

In einer bevorzugten Ausführungsform ist der Code auf der SIM-Karte oder im Speicher, wie dem Flash, abgelegt. Hierdurch ist es den Providern möglich zu bestimmen, welche Art von Diensten dem Gerät zugeordnet werden können und in welchen Netzwerken eine Verbindung aufgebaut werden kann.

Das mobile Endgerät benötigt einen Speicher, beispielhaft für den ausführbaren Code und/oder Content. Hierbei kann der ausführbare Code, Content oder auch Teile des ausführbaren Codes zum Beispiel mit Content im Endgerät selbst gespeichert werden. In weiteren besonderen Ausführungsformen können diese auch "lokal", "global", "virtuell" ausgelagert sein. Unter einem "lokalen" Speicher kann zum Beispiel ein Speichermedium direkt im und/oder am Endgerät betrachtet werden. Insbesondere eine Karte z.B. eine SIM-Karte, ein USB Stick oder ein Flash. Bei einem "globalen" Speicher kann ein Hardwarespeicher innerhalb der Netzwerkebene gemeint sein. In einer besonderen Ausführungsform benutzt das Endgerät nur ein Teil des eigenen Speichers und lagert alle weiteren Daten in einer der Netzwerkschichten und/oder deren Datenbanken aus. Somit steht dem Endgerät vorteilhafter Weise eine größere, nahezu unbegrenzte Speichergröße zur Verfügung. Hierbei können auch weitere mit dem Netz, Netzschichten, Netzsystem kommunizierende Endgeräte verwendet werden. Das Endgerät A verwendet als Speichermedium weitere Endgeräte hier Endgeräte B, C, usw. temporär und/oder als Festspeicher, Dubletten. Als Vermittler, Administrator tritt hier das Netz, Netzschichten, Netzsystem auf. Bei einem "virtuellen" Speicher wird dem Endgerätesystem nur ein Speichermedium simuliert, aber nicht "körperlich" weitergegeben bzw. vorgehalten. Ein Endgerät möchte beispielhaft einen Content speichern. Dieser Content wird zum Netzwerk übertragen. Dem Endgerät wird signalisiert, das die Speicherung erfolgreich verlaufen ist, - eine körperliche Speicherung erfolgt im System nicht. Bei einem virtuellen Speicher wird dem Sender vom Empfänger alle technischen Parameter geliefert, so dass dieser von einer erfolgreichen Speicherung ausgeht In einer besonderen Anwendung können auch Kombinationen zum Beispiel zwischen "virtuellem" Speicher und "lokalen, globalen, realem" Speicher auftreten. Das Endgerät A möchte beispielsweise einen Content, hier eine Mail von 5 Seiten speichern. Das System erkennt die Speicherung und lagert die Überschrift, das Logfile und 150 Wörter der Mail ab und sendet den weiteren Teile des Contents in einen "virtuellen" Speicher. Das Netzwerksystem hat selbstständig statistisch ermittelt, dass alle Endgeräte und/oder das Endgerät A im Durchschnitt 150 Wörter anzeigen. Somit können technische Mittel unter gewissen technischen Randparametern und Risiken eingespart werden. Weiterhin sind auch Kombinationen möglich.

In einer weiteren Ausführungsform, wie in Anspruch 4 beschrieben, verfügt das Endgerät A über besondere Leistungsmerkmale, so dass das Netzwerksystem dies erkennt und selbstständig verlässt, dass das Endgerät A in die Netzwerkschicht integriert wird, als wäre es technisch selber die Netzwerkschicht. Dies kann für das Endgerät A selbst und/oder für andere benutzt werden. Hierdurch können in vorteilhafter Weise lokale Engpässe minimiert oder ausgeglichen werden. Besonders Vorteilhaft ist es, das eine temporäre sich vergrößernde oder verkleinernde Netzwerkschicht entsteht, je nach Anforderung der Netzwerkstruktur. Weiter kann eine weitere virtuelle Schicht dem Netzwerksystem zugeführt werden.

In einer besonderen Ausführungsform testet die Netzwerkschicht das Endgerät. Hierbei können vorzugsweise unterschiedliche Testfälle berücksichtigt werden: Die Netzwerkschicht testet das Endgerät und stellt eine positiv-, negativ- Liste zusammen. Das Endgeräte "sagt"/ sendet technische Informationen, Signale, was es ist und was für technische Leistungsmerkmale es beinhaltet. Das Endgerät "sagt" was für technische Merkmale noch fehlen. Das Netzwerksystem verifiziert, identifiziert Netzwerkschichten.

Unter Gerätekennung wird unter anderem auch verstanden, eine Kennung die aus einer und/oder mehrere Kennungsklassen bestehen. Die einzelnen Kennungsklassen sind technische Merkmale, hier für die Kundenkennung, z.B. Kundennummer, PAN, Personalausweisnummer. Für die Kommunikationskennung wird z.B. CLI, (Calling Line Identification), HLR, (Home Location Register), IP-Adresse (Internet Protokoll), Rufnummer, Telefonrufnummer, Telekartennummer verwendet. Für die Gerätekennung, z.B. IMEI (International Mobil Equipment Identiy),Telekartennummer, SIM Karte (Subscriber Identity Modul), Smart Card. Es wird eine Transaktionskennung für die Transaktion verwendet. Die Biometrische Kennung kann, z.B. technische Merkmale zum Fingerprint, Voiceprint, Kombinationen wie VoiceIdent® ein Voiceprint mit Telekommunikationskennung sein. Weitere technische Kennungsklassen können sein, technische Parameter wie zum Beispiel, Sendeenergie, Empfangsenergie, Prüfsummen von Programmen im Endgerät und die Kombinatorisch verwendet der Kennungsklassen.

Durch diesen Ansatz ist es zum Beispiel möglich, auf bessere Provider in anderen Netzwerken umzuschalten, indem überprüft wird, wie die vorhandene Last im Netzwerk ist. Sollte eine Überlast gegeben sein, so können alternative günstigere Netzwerke gesucht werden, um dann durch Laden des ausführbaren Codes einen Übergang zu schaffen. Es ist dann möglich, dass über einen Tunnel wie z.B. VPN eine Verbindung zum ursprünglichen Netzwerk aufgebaut wird, wodurch eine bessere Qualität gegeben ist. Das Verschlüsseln übernimmt dabei die interpretierbare bzw. ausführbare Software. In der Bevorzugten Ausführungsform wird auf einer Basisstation eines ersten Providers die Software eines zweiten Providers auf einer virtuellen Maschinen laufen gelassen, so dass dem mobilen Endgerät nun vorgespielt wird, dass es mit der mobilen Station des zweiten Providers in Verbindung steht.

Dieser Netzwerkübergang kann zwischen GSM, UMTS, HDSC WLAN erfolgen. Die Software kann anhand von dynamischen Kriterien nun bestimmen, welches der vorhandenen Netzwerke ausgesucht werden soll.

In einer Ausführungsform testet das Endgerät A selbst die Verfügbarkeit der Netzwerkschicht und/oder Netzwerkebene und/oder Netzwerksystem indem es technische Parameter, und/oder Triggerpunkte und/oder Leistungsmerkmale der Schicht und/oder Funktionen der Schichten.

Fehlen dem Mobilgerät z.B. Funktionen zur Darstellung von gewissen Diensten, so kann eine Konvertierung der Informationen durch die Basisstation erfolgen. Sollte das mobile Gerät zum Beispiel in der Lage sein, Bilder anzuzeigen, jedoch nicht in der Lage sein, Faxe zu verarbeiten, so wird vom mobilen Endgerät eine entsprechende Software an die Basisstation übertragen, die ankommende Faxe in Bilddaten umwandeln, die das mobile Endgerät anzeigen kann, um sie dann dem Mobilgerät bereitzustellen. Auch können so z.B. Nachrichten bearbeitet werden. Das Fax kann zur SMS /MMS konvertiert und entsprechende der Spezifikation abgelegt werden, so dass diese auf dem Gerät darstellbar ist. Eine entsprechende Anwendung könnte die Darstellung von Filmen sein. So können z.B. die Filme in einer Reihe von Einzelbildern zerlegt werden, die nacheinander an das mobile Endgerät übertragen werden, um sie dort darzustellen. Für Geräte, die keine MMS darstellen können, gibt es gegebenenfalls Konvertierung- Tools, die MMS in eine SMS umwandeln und eine Bildinformation kann auch in eine Sprachnachricht umgewandelt werden. Das gleiche gilt für ein Fax, dies kann ebenfalls über eine Spracherkennungssoftware analysiert werden.

Ein weiterer Aspekt der Erfindung sind das Billing, Acounting, Charging, hierbei wird neben den fünf Functional Areas des System- und Netzmanagements, die in der Empfehlung X.700 der ITU definiert sind, weiter auch die Numerik verstanden, das -Zählen der Bits, Daten, Netzwerk-Ebenen, Komplexität, Einzelne- Gesamtzahl der Durchläufe der Netzwerk-Ebenen, Schichten.

### Im Folgenden ein Beispiel.

Das Endgeräte möchte einen gewissen Service, technische Merkmale erlangen und durchläuft mehre Schichten der Netzwerke. Hierbei werden aus den einzelnen Schichten ein Kommunikations-Log-Protokoll ermittelt und numerisch verarbeitet für Endgerät A und eine technisch spezifiziertes Billing kann erfolgen. Beispielsweise möchte das Endgerät A das Endgerät B mit der Rufnummer (02422-500) anrufe. Hierbei wird als Kriterium die Komplexität in den Netzwerkebenen zur Abrechnung genommen. Das Endgerät baut über die Vermittlungsstellen am Standort des Endgerätes A ein Datenpaket mit der möglichen Kennung <Endgerätekennung A, Netzwerkebene,-Kennung, Zeitpunkt, Transaktionsnummer ...... Datensatz .... > auf und versendet es an das Endgerät B. Da es sich hier um eine einfache Sprachqualität handeln, soll, können einzelne Datenpakete verloren gehen oder verzögert

ankommen. Die Komplexität ist gering, hier beispielhaft auf dem Level 1. Möchte der Kunde mit dem Endgerät A ein hohe Sprachqualität mit Geheimhaltung und Verschlüsselung durchführen, so werden höhere Anforderung an die technischen Parameter gesetzt. Die Daten müssen alle ankommen und die Datenpakete dürfen nur eine geringere Latenzzeit haben. Im Gerät und in den Netzschichten soll/muss eine Verschlüsselung erfolgen und im Endgerät entschlüsselt werden. Gleichzeitig können die Datenpakete gedoppelt werden und auf unterschiedlichen Routen versendet werden, damit sich eine höhere Verfügbarkeit ergibt Hierzu ist eine höhere Komplexität, ggfs immer die hohe Komplexität, zu nutzen und zu bezahlen, hierzu muss das Netzsystem flexibel sein und somit auch das Billing. In einer weiteren besonderen Ausführangsform kann das Billing im Endgerät erfolgen oder bei den einzelnen Netzschichten. Dieses gilt Analog bei peer to peer.

Man kann folglich die Erfindung in folgende Fälle gliedern.
Fall A: Das Kommunikationsnetz verändert die Applikation - (Netz verändert App.): Hierbei soll die Kommunikationsadresse erkannt und eine Zuordnungsmatrix generiert werden.
   Beispiel: CLI erkennt Provider und lädt automatisch die Applikation des Providers.
   Festplatte des mobilen Endgerätes wird als Speichermedium für die jeweiligen aktuellen Applikationen genutzt, CPU greift auf diese zu.
   Das Netz ist der Master.
   Ablauf:
   Endgerät wechselt Netzlokation.
      Netz erkennt alte Software-Releases (Apps) auf dem Endgerät
      Ausladen und Zwischenspeicherung der alten Software
      Download der aktuellen Software
      Kommunikation, z.B. über mobiles OTA (Over The Air)
      Nach Nutzung der neuen Software, reversibler Prozess bei alter Netzlokalisation.
Fall B: Die Applikation (App.) verändert das Kommunikationsnetz - (App. verändert Netz):
   Die Applikation ist der Master.
      Ablauf:
      App. erkennt Netzüberlast, z.B. EPlus und sucht lokal verfügbares Netz, z.B. T-Mobile
      App. sucht Netz aus DB
      App. verändert Netz, z.B. auf D1
      Kommunikation z.B. über mobiles OTA (Over The Air)
      Netzüberlast beendet, Nachricht aus DB an App.
      App. gibt Anweisung Netz wiederherzustellen.
      Hierbei dient die Anwendung zur Tunnelung der Daten durch das fremde Netzwerk. Die Tunnelung kann z.B. auf verschlüsselt erfolgen, z.B. VPN zum Netz des ursprünglichen Providers. Über eine Standardschnittstelle erfolgt dann die Abrechnung mit Hilfe des Interpreters / der VM der Basisstation.
Fall C: Die Applikation ist das Kommunikationsnetz - (Netz ist App.):
   Die Applikation ist das Netz in Form von LAN, WLAN, Radio usw. und schaltet zwischen diesen Optionen um.

Hierdurch ergibt sich, dass das mobile Endgerät optimiert werden kann, zum Kommunizieren/ Vermitteln/ Routen/ Administrieren Netz unabhängig oder selber das Netz sein kann. Dies kann z.B. nach folgenden Masterkriterien für Fall B erfolgen:
1. neuestes Release inkl. Steuerkennzeichen Neuheit
2. ältestes Release Neuheit
3. Funkfeldstairke
4. Entfernung zum nächsten Sendeturm
5. Provider,...

Für alle drei Fälle A, B und C kann die folgende Zuordnung jetzt automatisch erfolgen.

### Figurenbeschreibung

- Fig.: 1 zeigt ein Netzwerk mit mehreren Schichten, wie es im Bereich der mobilen Endgeräte eingesetzt wird.

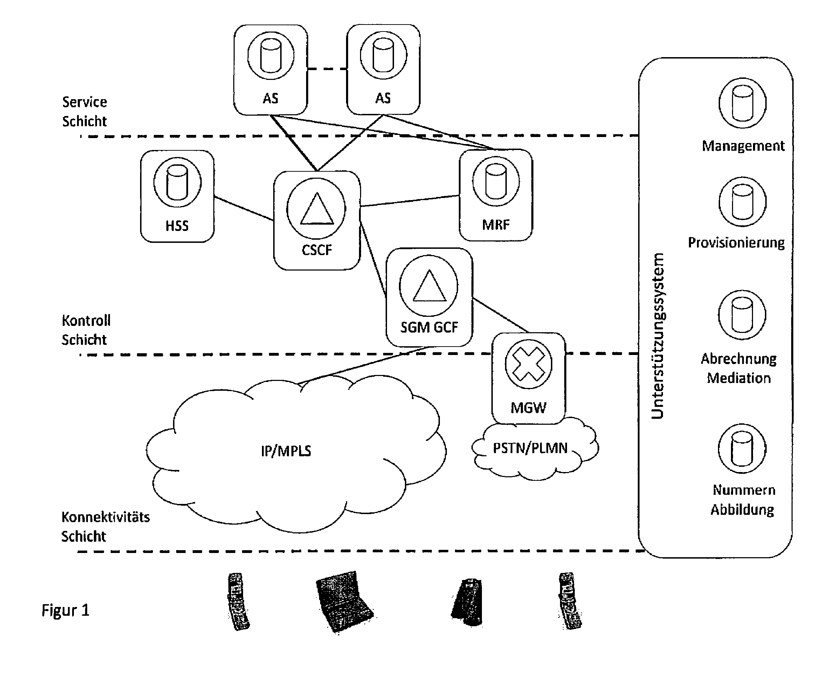

So zeigt die Figur 1 die Verbindungsebene/Layer (Connection Layer), auf der die physikalische Verbindung stattfindet. Auf dieser Ebene wird über Testrouten die Kompatibilität analysiert. Es ist auch denkbar, dass die Überprüfung auf dem Controlllayer (Kontrollschicht) erfolgt. Ein Austausch der ausführbaren Software, die die Kompatibilität herstellt, erfolgt vorzugsweise auf der Kontrollschicht, so dass dann auf der Anwendungsschicht kommuniziert werden kann.

## Patentansprüche

1. Verfahren zur Anpassung eines mobilen Netzwerkes mit mehreren Netzwerkschichten, umfassend mindestens ein mobiles Endgerät und ein Netzwerkelement, das eine Verbindung mit dem mobilen Endgerät zu einem Netzwerk herstellt, umfassend die folgenden Schritte:
- Analysieren der Kompatibilität des mobilen Endgerätes zum Netzwerkelement,
- falls das mobile Endgerät nicht kompatibel ist. Laden eines ausführbaren Codes vom mobilen Endgerät und/oder aus dem Netzwerk auf das Netzwerkelement, Ausführen dieses Codes durch das Netzwerkelement auf einem Interpreter und/oder einer virtuellen Maschine, wobei der Code die Kompatibilität herstellt.

2. Das Verfahren nach dem vorhergehenden Anspruch, wobei der ausführbare Code und/oder Teile des ausführbaren Codes in einem Speicher abgelegt sind, wie auf der SIM-Karte, Flash, USB-Stick, Biochip..

3. Das Verfahren nach einem oder mehreren der vorhergehenden Ansprüche, wobei die Überprüfung der Kompatibilität auf einer Netzwerkschicht erfolgt, die unterhalb derer ist auf der nach dem Laden des Codes eine Kommunikation durchgeführt wird.

4. Das Verfahren nach einem oder mehreren der vorhergehenden Ansprüche, wobei die Kompatibilität durch Testen des mobilen Endgerätes auf Fähigkeiten, technische Leistungsmerkmale und/oder der Gcrätekennung erfolgt.

5. Das Verfahren nach einem oder mehreren der vorhergehenden Ansprüche, wobei das mobile Endgerät mindestens eine Netzwerkschicht auf Verfügbarkeit und/oder Vollständigkeit, und/oder Parameter der Netzwerkschicht testet

6. Das Verfahren nach einem oder mehreren der vorhergehenden Ansprüche, wobei eine Überlast eines ersten Netzwerkes einen Wechsel zu einem weiteren Netzwerk des mobilen Endgerätes einleitet, wobei dies zum Laden des ausführbaren Codes führt.

7. Das Verfahren nach einem oder mehreren der vorhergehenden Ansprüche, wobei es sich um ein GSM, UMTS, WLAN, GPRS, HSCSD, EDGE, TDMA oder CDMA Netzwerke handelt

8. Das Verfahren nach einem oder mehreren der vorhergehenden Ansprüche, wobei bei der Prüfung auf Kompatibilität, die Version der Software auf dem mobilen Endgerät erkannt wird, wobei eine alte Version der Software ausgelagert oder deaktiviert wird, und aus dem Netzwerk eine neue Version der Software gesendet wird, um dann die Kommunikation zu starten.

9. Das Verfahren nach einem oder mehreren der vorhergehenden Ansprüche, wobei bei der Prüfung auf Kompatibilität, die Version der Software auf dem mobilen Endgerät erkannt wird, wobei im Netzwerk die Version erkannt wird und eine alte Version der Software ausgelagert oder deaktiviert wird, und an das Netzwerk eine neue Version der Software gesendet wird, um dann die Kommunikation zu starten.

10. Das Verfahren nach einem oder mehreren der vorhergehenden Ansprüche, wobei ein ausführbarer Code für eine oder mehrere der folgenden Dienste bereitgestellt wird: Fax-Nachrichten, SMS, MMS, Video, Bilder, Content, Telefon, Steuerung von Heimgeräten, Alarmierung.

11. Das Verfahren nach einem oder mehreren der vorhergehenden Ansprüche, wobei das Netzwerkelement eine Basisstation und/oder ein WLAN-Router und/oder ein Netzwerkrouter und/oder ein Netzwerkswitch ist.

12. Das Verfahren nach einem oder mehreren der vorhergehenden Ansprüche, wobei die virtuelle Maschine oder der Interpreter durch das Laden des ausführbaren Codes, ein Kommunizieren und/oder Vermitteln und/oder Routen, und/oder Administrieren bestimmt.

13. Verfahren nach einem oder mehreren der vorhergehenden Ansprüche, wobei zur Ermittlung von Abrechnungsdaten/Billingdaten, eine Verwendung einzelner Ebenen, und/oder Ebenenfolge und/oder Ebenendurchläufe der Netzwerke herangezogen werden.

14. Das Verfahren nach dem vorhergehenden Anspruch, wobei folgende Kriterien für das Laden des ausführbaren Codes berücksichtigt werden:
- Vorliegen einer neueren Version des ausführbaren Codes, und/oder - Vorliegen einer weiteren ausführbaren Codes und/oder
- Vorliegen einer größeren Funkfeldstärke, und/oder
- Vorliegen eines alternativen Providers

15. Netzwerkelement in einem Netzwerk mit mehreren Netzwerkschichten, umfassend mindestens ein mobiles Endgerät das eine Verbindung mit dem Endgerät zu einem Netzwerk herstellt, umfassend folgende Komponenten:
- Mittel zum Analysieren der Kompatibilität des Endgerätes zum Netzwerkelement,
- falls das Endgerät nicht kompatibel ist, Mittel zum Laden eines ausführbaren Codes vom Endgerät und/oder aus dem Netzwerk auf das Netzwerkelement, um diesen Code durch das Netzwerkelement auf einem Interpreter und/oder einer virtuellen Maschine auf dem Netzwerkelement auszuführen, wobei der Code die Kompatibilität mit dem Endgerät herstellt.

16. Das Netzwerkelement nach dem vorhergehenden Netzwerkelementanspruch, wobei der ausführbare Code und/oder Teile davon in einem Speicher, wie Flash, USB Stick, Biochip SIM-Karte abgelegt ist.

17. Das Netzwerkelement nach einem oder mehreren der vorhergehenden Netzwerkelementansprüche, wobei Mittel vorhanden sind, um eine die Überprüfung der Kompatibilität auf einer Netzwerkschicht durchzuführen, die unterhalb derer ist auf der nach dem Laden des Codes eine Kommunikation durchgeführt wird.

18. Das Netzwerkelement nach einem oder mehreren der vorhergehenden Netzwerkelementansprüche, wobei Mittel vorhanden sind, die die Kompatibilität durch Testen des mobilen Endgerätes auf Fähigkeiten und/oder technische Leistungsmerkmale und/oder Gerätekennung erkennen.

19. Das Netzwerkelement nach einem oder mehreren der vorhergehenden Netzwerkelementansprüche, wobei es sich um mindestens ein Netzwerk, wie GSM, UMTS, HSCSD oder WLAN Netzwerk handelt, in dem das Netzwerkelement angeordnet ist.

20. Das Netzwerkelement nach einem oder mehreren der vorhergehenden Netzwerkelementansprüche, wobei Mittel vorhanden sind, die bei der Prüfung auf Kompatibilität die Version der Software auf dem mobilen Endgerät erkennt, wobei eine alte Version ausgelagert oder deaktiviert wird, und aus dem Netz eine neue Version der Software gesendet wird, um dann die Kommunikation zu starten.

21. Das Netzwerkelement nach einem oder mehreren der vorhergehenden Netzwerkelementansprüche, wobei Mittel vorhanden sind, die bei der Prüfung auf Kompatibilität die Version der Software auf dem Endgerät erkennt, wobei eine alte Version ausgelagert oder deaktiviert wird, und vom Endgerät eine neue Version der Software gesendet wird, um dann die Kommunikation zu starten.

22. Das Netzwerkelement nach einem oder mehreren der vorhergehenden Netzwerkelementansprüche, wobei Mittel vorhanden sind, die ausführbare Codes für eine oder mehrere der folgenden Dienste bereitstellen: Fax-Nachrichten, SMS, MMS, Video, Bilder, Content, Telefon, Steuerung von Heimanwendung, Alarmierung.

23. Das Netzwerkelement nach einem oder mehreren der vorhergehenden Netzwerk-elementansprüche, wobei das Netzwerkelement eine Basisstation und/oder und/oder ein WLAN-Router und/oder ein Netzwerkrouter und/oder ein Netzwerkswitch ist.

24. Das Netzwerkelement nach einem oder mehreren der vorhergehenden Netzwerkelementansprüche, wobei die virtuelle Maschine oder der Interpreter durch das Laden des ausführbaren Codes, ein Kommunizieren, Vermitteln, Roten und/oder Administrieren bestimmt.

25. Das Netzwerkelement nach dem vorhergehenden Anspruch, wobei weitere Kriterien für das Laden des ausführbaren Codes berücksichtigt werden: Vorliegen einer neueren Version des ausführbaren Codes.

26. Das Netzwerkelement nach einem oder mehreren der vorhergehenden Netzwerkelementansprüche, wobei Mittel zur Ermittlung von Abrechnungsdaten/Billingdaten vorhanden sind, die zum Accounting einzelne Ebenen, und/oder Ebenenfolge und/oder Ebenendurchläufe der Netzwerke heranziehen.

## Claims

1. Method for adapting a mobile network with multiple network layers, comprising at least one mobile terminal and a network element, which forms a connection with the mobile terminal to a network, comprising the following steps;
• analysing the compatibility of the mobile terminal to the network element,
• if the mobile terminal is not compatible, loading an executable code from the mobile terminal and/or from the network to the network element, executing this code by the network element on an interpreter and/or a virtual machine, wherein the code creates the compatibility.

2. The method according to the preceding claim, wherein the executable code and/or parts of the executable code are filed in a memory such as on the SIM card, Flash, USB stick, biochip.

3. The method according to one of more of the preceding claims, wherein checking of the compatibility is performed on a network layer, which is underneath that on which a communication is conducted after loading of the code.

4. The method according to one or more of the preceding claims, wherein the compatibility occurs through testing the mobile terminal for capabilities, technical performance characteristics and/or the device code.

5. The method according to one or more of the preceding claims, wherein the mobile terminal tests at least one network layer for availability and/or integrity and/or parameters of the network layer.

6. The method according to one or more of the preceding claims, wherein an overload of a first network initiates a change to a further network of the mobile terminal, wherein this leads to the loading of the executable code.

7. The method according to one or more of the preceding claims, wherein it concerns a GSM, UMTS, WLAN, GPRS,13SCSD, EDGE, TDMA or CDMA network.

8. The method according to one or more of the preceding claims, wherein in the test for compatibility, the version of the software on the mobile terminal is recognised, wherein an old version of the software is swapped or deactivated, and a new version of the software is transmitted from the network to then start the communication.

9. The method according to one or more of the preceding claims, wherein in the test for compatibility, the version of the software on the mobile terminal is recognised, wherein the version is recognised in the network and an old version of the software is swapped or deactivated and a new version of the software is transmitted to the network to then start the communication,

10. The method according to one or more of the preceding claims, wherein an executable code is provided for one or more of the following services: fax messages, SMS, MMS, video, images, content, telephone, control of devices in the home, alarm.

11. The method according to one or more of the preceding claims, wherein the network element is a base station and/or a WLAN router and/or a network router and/or a network switch.

12. The method according to one or more of the preceding claims, wherein the virtual machine or the interpreter determines a communication and/or switching and/or routing and/or administration action by loading the executable code.

13. The method according to one or more of the preceding claims, wherein a use of individual levels and/or level sequence and/or level runs of the networks is employed to determine accounting data/billing data.

14. The method according to the preceding claim, wherein the following criteria are considered for loading the executable code:
• the presence of a newer version of the executable code, and/or
• the presence of a further executable code and/or
• the presence of a higher radio field intensity and/or
• the presence of an alternative provider.

15. Network element in a network with multiple network layers, comprising at least one mobile terminal, which forms a connection with the terminal to a network, comprising the following components:
• means for analysing the compatibility of the mobile terminal to the network element,
• if the mobile terminal is not compatible, means for loading an executable code from the mobile terminal and/or from the network to the network element to execute this code by the network element on an interpreter and/or a virtual machine on the network element, wherein the code creates the compatibility with the terminal.

16. The network element according to the preceding network element claim, wherein the executable code and/or parts thereof are filed in a memory such as Flash, USB stick, biochip, SIM card.

17. The network element according to one of more of the preceding network element claims, wherein means are provided to perform a check for compatibility on a network layer, which is underneath that on which a communication is conducted after loading of the code.

18. The network element according to one of more of the preceding network element claims, wherein means are provided to recognise the compatibility through testing the mobile terminal for capabilities and/or technical performance characteristics and/or device code.

19. The network element according to one of more of the preceding network element claims, wherein it concerns at least one network such as GSM, UMTS, HSCSD or WLAN network, in which the network element is arranged.

20. The network element according to one of more of the preceding network element claims, wherein means are provided that in the test for compatibility recognise the version of the software on the mobile terminal, wherein an old version of the software is swapped or deactivated, and a new version of the software is transmitted from the network to then start the communication.

21. The network element according to one of more of the preceding network element claims, wherein means are provided that in the test for compatibility recognise the version of the software on the mobile terminal, wherein an old version of the software is swapped or deactivated and a new version of the software is transmitted from the terminal to then start the communication.

22. The network element according to one of more of the preceding network element claims, wherein means are provided to provide the executable codes for one or more of the following services: fax messages, SMS, MMS, video, images, content, telephone, control of devices in the home, alarm.

23. The network element according to one of more of the preceding network element claims, wherein the network element is a base station and/or a WLAN router and/or a network router and/or a network switch.

24. The network element according to one of more of the preceding network element claims, wherein the virtual machine or the interpreter determines a communication, switching, routing and/or administration action by loading the executable code.

25. The method according to the preceding claim, wherein further criteria are considered for loading the executable code: presence of a newer version of the executable code.

26. The network element according to one of more of the preceding network element claims, wherein means are provided to determine accounting data/billing data, which employ individual levels and/or level sequence and/or level runs of the networks for accounting.

## Revendications

1. Méthode d'adaptation d'un réseau mobile disposant de plusieurs couches réseau, comportant au moins un terminal mobile et un élément de réseau, lequel établit une connexion avec le terminal mobile vers un réseau, comportant les étapes suivantes :
- l'analyse de la compatibilité du terminal mobile à l'élément de réseau ;
- si le terminal mobile est identifié comme n'étant pas compatible, le chargement d'un code exécutable depuis le terminal mobile et/ou depuis le réseau vers l'élément de réseau, l'exécution de ce code par l'élément de réseau sur un interpréteur et/ou une machine virtuelle, dans laquelle le code crée la compatibilité.

2. La méthode selon la revendication précédente, dans laquelle le code exécutable et/ou des parties du code exécutable sont stockées dans une mémoire telle qu'une carte SIM, une mémoire Flash, un dispositif USB, ou une biopuce.

3. La méthode selon l'une ou plusieurs des revendications précédentes, dans laquelle le test de la compatibilité est réalisé sur une couche du réseau, qui est située en-deçà de celle mise en oeuvre lors de la communication après le chargement du code.

4. La méthode selon l'une ou plusieurs des revendications précédentes, dans laquelle la compatibilité est établie au travers la vérification du terminal mobile en terme de capacité, de performances, et/ou du code du dispositif.

5. La méthode selon l'une ou plusieurs des revendications précédentes, dans laquelle le terminal mobile teste au moins une couche réseau pour sa disponibilité et/ou l'intégrité et/ou les paramètres de la couche réseau.

6. La méthode selon l'une ou plusieurs des revendications précédentes, dans laquelle une surcharge d'un premier réseau initie une commutation vers un réseau supplémentaire du terminal mobile, conduisant au chargement du code exécutable.

7. La méthode selon l'une ou plusieurs des revendications précédentes, correspondant à un réseau GSM, UMTS, WLAN, GPRS, HSCSD, EDGE, TDMA, ou CDMA.

8. La méthode selon l'une ou plusieurs des revendications précédentes, dans laquelle lors du test de compatibilité, est reconnue la version du logiciel sur le terminal mobile, dans lequel une version antérieure du logiciel est substituée ou désactivée et une nouvelle version du logiciel est transmise depuis le réseau pour le démarrage subsequent de la communication.

9. La méthode selon l'une ou plusieurs des revendications précédentes, dans laquelle lors du test de compatibilité, est reconnue la version du logiciel sur le terminal mobile, dans lequel la version est identifiée dans le réseau et une version antérieure du logiciel est échangée ou désactivée et une nouvelle version du logiciel est transmise vers le réseau pour le démarrage ultérieur de la communication.

10. La méthode selon l'une ou plusieurs des revendications précédentes, dans laquelle un code exécutable est mis à disposition pour un ou plusieurs des services suivants : messages fax, SMS, MMS, video, images, contenu, téléphone, commande domotique, alarmes.

11. La méthode selon l'une ou plusieurs des revendications précédentes, dans laquelle l'élément de réseau est une station de base et/ou un routeur WLAN et/ou un routeur de réseau et/ou un commutateur de réseau.

12. La méthode selon l'une ou plusieurs des revendications précédentes, dans laquelle la machine virtuelle ou l'interpréteur détermine une communication et/ou la commutation et/ou le routage et/ou une action d'administration au moyen du chargement du code exécutable.

13. La méthode selon l'une ou plusieurs des revendications précédentes, dans laquelle l'utilisation de niveaux individuels et/ou d'une séquence de niveaux et/ou d'exécution de niveaux du réseau servent à la détermination de données de facturation ou comptables.

14. La méthode selon la revendication précédente, dans laquelle les critères suivants sont considérés à des fins de chargement du code exécutable :
- la présence d'une nouvelle version d'un code exécutable, et/ou
- la présence d'un code exécutable supplémentaire, et/ou
- la présence d'un rayonnement électromagnétique plus élevé, et/ou
- la présence d'un fournisseur d'accès différent.

15. Elément de réseau au sein d'un réseau disposant de multiples couches réseaux, comportant au moins un terminal mobile établissant une connexion du terminal vers un réseau, comportant les éléments suivants :
- des moyens d'analyse de la compatibilité du terminal mobile avec l'élément de réseau ;
- lorsque le terminal mobile est identifié comme n'étant pas compatible, des moyens de chargement d'un code exécutable depuis le terminal mobile et/ou depuis le réseau vers l'élément de réseau pour l'exécution de ce code par l'élément de réseau sur un interpréteur et/ou une machine virtuelle sur l'élément de réseau, dans laquelle le code crée la compatibilité avec le terminal.

16. L'élément de réseau selon la revendication d'élément de réseau précédente, dans lequel le code exécutable et/ou des parties de ce code sont stockées dans une mémoire telle qu'une mémoire Flash, un dispositif USB. une biopuce, une carte SIM.

17. L'élément de réseau selon l'une ou plusieurs des revendications précédentes d'élément de réseau, dans lequel des moyens sont mis à disposition pour effectuer une vérification de la compatibilité sur une couche réseau, laquelle se situe en deçà de la couche sur laquelle est établie une communication après le chargement du code.

18. L'élément de réseau selon l'une ou plusieurs des revendications précédentes d'élément de réseau, dans lequel des moyens sont mis à disposition pour la reconnaissance de la compatibilité au travers de la vérification du terminal mobile en ce qui concerne ses capacités et/ou ses caractéristiques de performance technique et/ou le code du dispositif.

19. L'élément de réseau selon l'une ou plusieurs des revendications précédentes d'élément de réseau, correspondant au moins à un réseau de type GSM, UMTS, HSCSD ou WLAN, au sein duquel est disposé l'élément de réseau.

20. L'élément de réseau selon l'une ou plusieurs des revendications précédentes d'élément de réseau, dans lequel des moyens sont mis à disposition lors du test de compatibilité pour reconnaître la version du logiciel sur le terminal mobile, dans lequel une version antérieure du logiciel est substituée ou désactivée et une nouvelle version du logiciel est transmise depuis le réseau pour le démarrage ultérieur de la communication.

21. L'élément de réseau selon l'une ou plusieurs des revendications précédentes d'élément de réseau, dans lequel des moyens sont mis à disposition lors du test de compatibilité pour reconnaître la version du logiciel sur le terminal mobile, dans lequel une version antérieure du logiciel est substituée ou désactivée et une nouvelle version du logiciel est transmise depuis le terminal pour le démarrage ultérieur de la communication.

22. L'élément de réseau selon l'une ou plusieurs des revendications précédentes d'élément de réseau, dans lequel des moyens sont mis à disposition pour l'exécution des codes exécutables pour un ou plusieurs des services suivants : messages fax, SMS, MMS, video, images, contenu, téléphone, commande domotique, alarmes.

23. L'élément de réseau selon l'une ou plusieurs des revendications précédentes d'élément de réseau, dans lequel l'élément de réseau est une station de base et/ou un routeur WLAN et/ou un routeur de réseau et/ou un commutateur de réseau.

24. L'élément de réseau selon l'une ou plusieurs des revendications précédentes d'élément de réseau, dans lequel la machine virtuelle ou l'interpréteur détermine une communication et/ou la commutation et/ou le routage et/ou une action d'administration au moyen du chargement du code exécutable.

25. L'élément de réseau selon l'une ou plusieurs des revendications précédentes d'élément de réseau, dans lequel un critère supplémentaire est considérés pour le chargement du code exécutable : présence d'une nouvelle version du code exécutable.

26. L'élément de réseau selon l'une ou plusieurs des revendications précédentes d'élément de réseau, dans lequel sont mis à disposition des moyens pour déterminer des données comptables ou de facturation, lesquelles mettent en oeuvre des niveaux individuels et/ou une sequence de niveau et/ou des exécutions de niveau des réseaux à des fins comptables.
